# EUROPEAN PATENT APPLICATION

(11) **EP 1 046 907 A2**
(43) Date of publication of application: **25.10.2000**
(21) Application number: 00201823.2
(22) Date of filing: 12.12.1996
(51) Int. Cl.: G01N 27/447

(54) **Gel holders and electrophoresis gel apparatus containing such holders**

(30) Priority: 12.12.1995 US 571297
(62) Divisional of application: 96940960.6
(71) Applicant: VISIBLE GENETICS INC., Toronto, Ontario M5G 1Z6 (CA)
(72) Inventor: The designation of the inventor has not yet been filed
(74) Representative: Austin, Hedley William

(57) **Abstract**

A gel holder for use in an electrophoresis apparatus. The apparatus has a fluorescence detection system in which a light of an excitation wavelength is directed to an excitation/detection zone of the apparatus and light of an emission wavelength is detected when fluorescent substances are present in the excitation/detection zone. The gel holder has two planar substrate with a spacer disposed between the substrates. One of the substrates is of a material which is optically transparent at the excitation and emission wavelengths at least in the region of the excitation/detection zone. The second substrate is of a material which absorbs light at least at the excitation wavelength. This can substantially reduce the amount of background fluorescence and improve the sensitivity of the observations.

## Description

The present invention is concerned with gel holders and electrophoresis gel apparatus containing such holders.

DNA sequencing may be carried out using automated systems designed for laboratory application. Methods and apparatus for sequencing of DNA are described in U.S. Patents Nos. 4811218; 4823007; 5062942; 5091652; 5119316 and 5122345.

The general methodology employed in these systems involves breaking up the sample DNA using restriction endonucleases; amplifying (for example with PCR) the restriction fragment of interest; combining the amplified DNA with a sequencing primer which may be the same as, or different from, the amplification primers; extending the sequencing primer in the presence of normal nucleotides (A, C, G, and T) and a chain-terminating nucleotide, such as a dideoxynucleotide, which prevents further extension of the primer once incorporated; and analysing the product for the length of the extended fragments obtained. Analysis of fragments may be done by electrophoresis, for example on a polyacrylamide gel.

According to the present invention, there is provided a gel holder for use in an electrophoresis apparatus. The apparatus has a fluorescence detection system in which a light of an excitation wavelength is directed to an excitation/detection zone of the apparatus and light of an emission wavelength is detected when fluorescent substances are present in the excitation/detection zone, comprising:
(a) a planar first substrate;
(b) a planar second substrate; and
(c) a spacer disposed between the first substrate and the second substrate, the substrates and the spacer in concert defining a gel chamber having a thickness defined by the spacer, wherein the first substrate is of a material which is optically transparent at the excitation and emission wavelengths at least in the region of the excitation/detection zone, and the second substrate is of a material which absorbs light at least at the excitation wavelength.

It is a preferred feature of the present invention that the first substrate of the gel holder is thinner than the second substrate and/or is thinner than the second substrate in a localised region aligned with the excitation/detection zone. It is further preferred that the first substrate absorbs light of the excitation wavelength at regions remote from the localised region aligned with the excitation/detection zone.

According to a further aspect of the present invention, there is provided an electrophoresis gel apparatus comprising a gel holder according to the present invention and a polymerised gel (such as polyacrylamide) disposed within the gel chamber of the gel holder.

The invention will now be further described in a specific embodiment by way of example only and with reference to the accompanying drawings in which:
Figures 1A and 1B show a gel holder in accordance with the present invention;
Figure 2 shows the gel holder of Figure 1 in use in an electrophoresis apparatus according to the present invention;
Figure 3 shows an electrophoresis gel holder with a thin substrate according to the invention;
Figures 4A and 4B show the use of thin regions in gel holders according to the invention; and
Figures 5A and 5B show construction alternatives for substrates with thin regions.

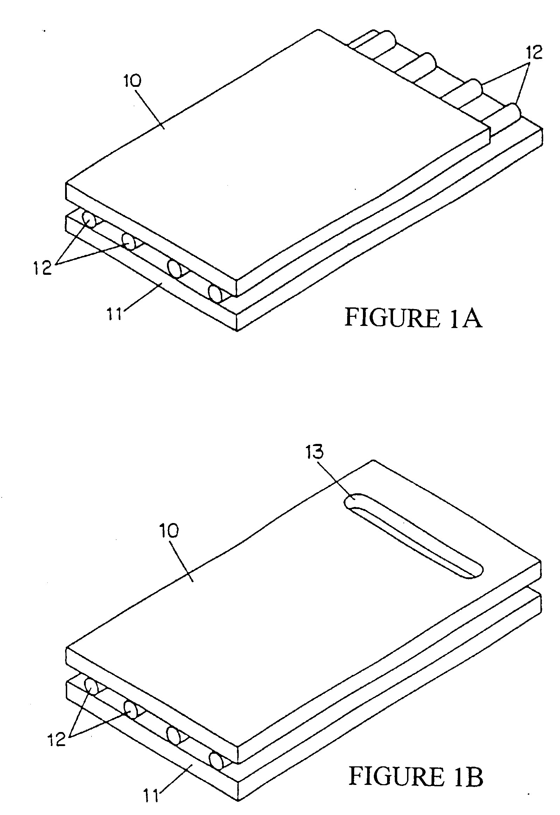

Referring to the drawings and initially to Figure 1, there is shown a gel holder formed from a top substrate (10), a bottom substrate (11) and a plurality of fibres (spacers) (12). The fibres (spacers) (12) are disposed parallel to one another and to opposing edges of the substrates (10,11) and extend from one end of the substrates to the other. The bottom substrate (11) may extend beyond the top substrate (10) at one end of the gel holder as shown to facilitate loading of electrophoresis samples, in which case the fibres (spacers) (12) may end level with the top substrate (10) or extend out onto the bottom substrate (11) as shown in Figure 1A. Alternatively, an opening (13) may be cut near one end of the top substrate for this purpose (Figure 1B).

The substrates used in forming the gel holders of the present invention may be any flat, planar material which is compatible with the electrophoresis gel and the method of detection to be employed. Thus, in some cases, plastic materials which do not interfere with the polymerisation of the electrophoresis gel or the observation of the separated fragments on the electrophoresis gel can be used. Preferably, however, the substrates are made from glass, and most preferably from low-fluorescing glass. 1 mm borosilicate glass which has greater ultraviolet light transparency is another preferred material. At least one of the substrates used in forming the gel holder of the invention must be made from a material which will permit observation of the materials separated within the electrophoresis gel.

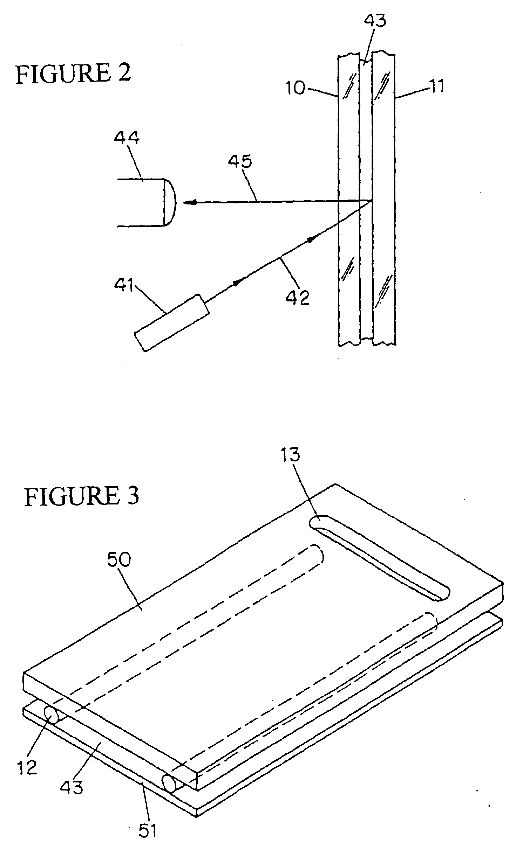

In Figure 2, there is shown the gel holder of Figure 1 in use in an electrophoresis apparatus in which the interrogating beam source, for example a laser (41) producing a beam of light (42) for exciting fluorescent molecules in the gel (43), and the detector (44) for detecting emitted light (45) are located on the same side of the electrophoresis gel. In this case, the bottom substrate (11) can be selected to minimise any contribution to background radiation rather than for its ability to permit observation of the sample. For example, in the case of a gel holder intended for use in a sequencing apparatus with a fluorescence detection system, the bottom substrate (11) can be made from a coloured glass which absorbs all of the exciting light which reaches it, and which thus is essentially non-fluorescent. Since background fluorescence arises in large part from fluorescent impurities in the substrates, this can substantially reduce the amount of background fluorescence and improve the sensitivity of the observations.

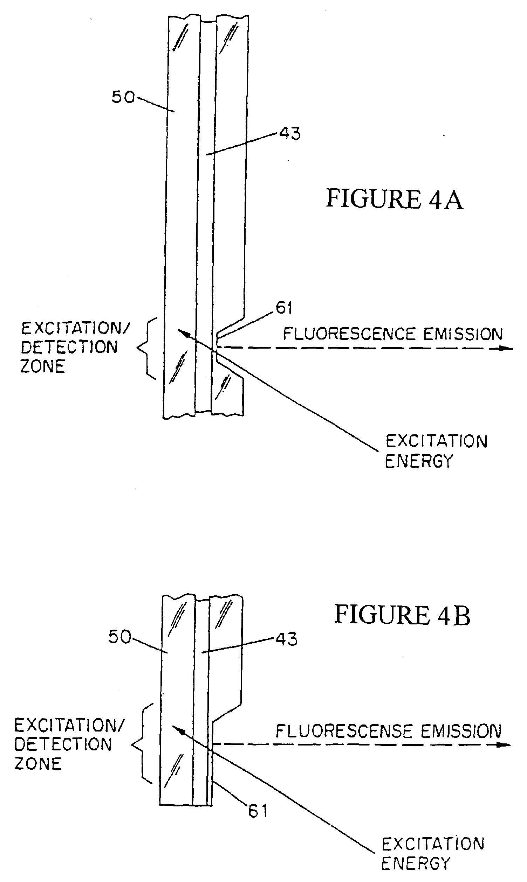

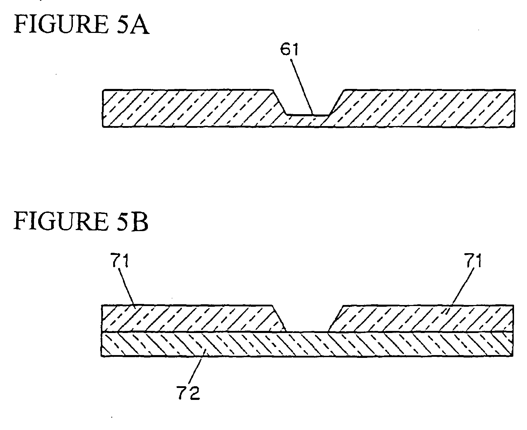

Another approach to reducing the background fluorescence is to utilise thinner substrates for the transparent substrate. For example, as shown in Figure 3, one substrate (50) can be made of thicker absorbing and non-fluorescing material while the other substrate (51) is made of a very thin (i.e. 0.1 mm or less) transparent, low fluorescing material. Suitable thin materials include "cover slip" glass. The thin region (61) may also be localised to just an excitation/detection zone running perpendicular to the fibres (spacers) as show in Figure 4A, or cover one edge of the gel as shown in Figure 4B. Such substrates can be formed by moulding a contiguous substrate into the desired shape (Figure 5A), or by affixing blocks (71) of thicker materials onto a continuous thin substrate (72) (Figure 5B). In the latter case, the blocks (71) of thicker material may also be formed from absorbing, non-fluorescing materials to further reduce background fluorescence.

Once the gel holder has been formed, the next step is the filling of the chamber with a gel forming solution and the polymerisation of the solution to form a gel. This process can be performed in any of a number of ways which will be apparent to persons skilled in the art. Preferably, the gel holder is filled using an apparatus of the type described in WO 96/13715.

## Claims

1. A gel holder for use in an electrophoresis apparatus, which apparatus has a fluorescence detection system (41,44) in which a light of an excitation wavelength (42) is directed to an excitation/detection zone of said apparatus and light of an emission wavelength (45) is detected when fluorescent substances are present in the excitation/detection zone, comprising:
(i) a planar first substrate (10);
(ii) a planar second substrate (11); and
(iii)a spacer disposed between the first substrate (10) and the second substrate (11), said substrates (10,11) and said spacer in concert defining a gel chamber having a thickness defined by the spacer,
characterised in that the first substrate (10) is formed from a material which is optically transparent at the excitation and emission wavelengths (42,45) at least in the region of the excitation/detection zone, and the second substrate (11) is formed from a material which absorbs light at least at the excitation wavelength (42).

2. A gel holder according to claim 1, wherein the first substrate (51) is thinner than the second substrate (50) and/or is thinner than the second substrate (50) in a localised region (61) aligned with the excitation/detection zone.

3. A gel holder according to claim 2, wherein the first substrate absorbs light of the excitation wavelength (42) at regions remote (71) from the localised region (61) aligned with the excitation/detection zone.

4. Electrophoresis gel apparatus comprising:
(i) a gel holder according to any of claims 1 to 3; and
(ii) a polymerised gel (43) (such as polyacrylamide) disposed within the gel chamber.
